# EUROPÄISCHE PATENTSCHRIFT

(11) **EP 2 106 840 B1**
(45) Veröffentlichungstag und Bekanntmachung des Hinweises auf die Patenterteilung: **01.10.2014**
(21) Anmeldenummer: 09156029.2
(22) Anmeldetag: 24.03.2009
(51) Int. Cl.: B01D 53/86, B01J 21/18, B01J 35/10

(54) **Aktivkohle-Katalysator**
Activated carbon catalyst
Catalyseur au charbon actif

(30) Priorität: 31.03.2008 DE 102008000890
(43) Veröffentlichungstag der Anmeldung: 07.10.2009
(73) Patentinhaber: Carbotech AC GmbH, 45139 Essen (DE)
(72) Erfinder: Henning, Klaus-Dirk, 45276 Essen (DE); Bongartz, Wolfgang, 41066 Mönchengladbach (DE)
(74) Vertreter: Gille Hrabal

(56) Entgegenhaltungen:
- EP-A2- 0 729 783
- WO-A1-2008/040438
- DE-A1- 10 028 654
- SVETLANA BASHKOVA ET AL: 'Adsorption/Oxidation of CH 3 SH on Activated Carbons Containing Nitrogen' LANGMUIR Bd. 19, Nr. 15, 01 Juli 2003, Seiten 6115 - 6121, XP055028960 DOI: 10.1021/la0300030 ISSN: 0743-7463

## Beschreibung

Die vorliegende Erfindung betrifft einen Aktivkohle-Katalysator, welcher auch bei Anwesenheit von Katalysatorgiften ausreichend aktiv ist, Stickoxide in Gegenwart von Ammoniak zu Stickstoff und Wasser umzusetzen. Weiterer Gegenstand der vorliegenden Erfindung ist ein Verfahren zur Herstellung des erfindungsgemäßen Aktivkohle-Katalysators sowie dessen Verwendung zur Reduktion von Stickoxiden.

Stickoxide gehören zu den Abgaskomponenten, die während Verbrennungsvorgängen entstehen und deren erlaubte Emission aufgrund von Umwelteinflüssen immer weiter abgesenkt werden müssen. Die Verringerung der Stickoxide geschieht dabei meist mit Hilfe von Katalysatoren.

Verfahren zur Reduktion von Stickoxiden sind an sich bekannt. Bekannt geworden sind diese Verfahren unter dem Sammelbegriff "SCR-Verfahren", wobei SCR für "selektive katalytische Reduktion" steht. Ihr Einsatz erfolgt seit vielen Jahren in Kraftwerken, Feuerungsanlagen, Müllverbrennungsanlagen, Gasturbinen, Industrieanlagen und Motoren. Eine ausführliche Darstellung solcher Verfahren ist der DE 34 28 232 A1 zu entnehmen. Charakteristisch für entsprechende SCR-Verfahren ist, dass am mineralischen dotierten kohlenstofffreien Katalysator die chemische Reaktion dabei im Allgemeinen selektiv verläuft, das heißt, es werden bevorzugt die Stickoxide NO und NO₂ reduziert, während unerwünschte Nebenreaktionen (wie zum Beispiel die Oxidation von Schwefeldioxid zu Schwefeltrioxid) weitgehend unterdrückt werden.

Als SCR-Katalysatoren können V₂O₅-haltige Mischoxide, beispielsweise in der Form V₂O₅/WO₃/TiO₂, verwendet werden. Weitere bekannte Katalysatoren für die Umsetzung sind Zeolithe.

Als Reduktionsmittel kommen in der praktischen Anwendung Ammoniak oder Ammoniak abspaltende Verbindungen, wie Harnstoff oder Ammoniumformiat, in fester oder gelöster Form zum Einsatz. Für die Umsetzung von einem Mol Stickstoffmonoxid ist dabei gemäß nachfolgender Reaktionsgleichung (1) ein Mol Ammoniak notwendig:

4 NO + 4 NH₃ + O₂ → 4 N₂ + 6 H₂O (1).

Die Produkte der Reaktion sind entsprechend Wasser (H₂O) und Stickstoff (N₂). Chemisch gesehen handelt es sich bei der Reaktion um eine Komproportlonierung der Stickoxide mit Ammoniak zu Stickstoff.

Aus der WO 2008/040438 A Ist ein Verfahren zur Herstellung von Aktivkohlekatalysatoren beschrieben. Die Druckschrift offenbart keine Hinweise auf die Herstellung von Aktivkohlekatalysatoren mit gleichzeitig speziellen Stickstoffgehältern. Volumen der Makroporen und Volumen der Mikroporen.

Aus der EP 0 729 783 A sind "Carbon Molecular Slevers" bekannt, die jedoch eine homogene Mikroporenverteilung mit mittleren Porendurchmessern von 0,3 bis 1 nm aufweisen.

Die aus dem Stand der Technik bekannten Katalysatoren für die SCR-Verfahren weisen den Nachteil auf, dass sie bei Anwesenheit von Katalysatorgiften Im Rohgas (z. B. Arsen, Bor) sehr schnell ihre katalytische Aktivität verlieren. Zusätzlich sind sie nicht In der Lage, Stlckoxide In Gegenwart von Ammoniak in einem akzeptablen Temperaturbereich von beispielsweise 90 bis 160 °C zu Stickstoff und Wasser umzusetzen.

Für diese Aufgabenstellung sind die klassischen SCR-Verfahren mit den handelsüblichen bekannten SCR-Katalysatoren nicht geeignet, da die genannten Schwermetalle den Katalysator schon nach kurzen Standzeiten deaktivieren. Zusätzlich liegen die benötigten Reaktionstemperaturen bei den klassischen SCR-Katalysatoren bei 300 bis 350 °C und selbst für die kostspieligen neuen Niedrigtemperatur-SCR-Katalysatoren, wie sie beispielsweise in der EP 0 593 790 A beschrieben werden, werden Temperaturen oberhalb von 160 °C benötigt. Es besteht somit ein energetischer Nachteil durch die erforderliche Erhitzung der Gase auf Temperaturen oberhalb von 160 °C.

Ausgehend von diesem Stand der Technik stellt sich die vorliegende Erfindung die Aufgabe, einen Katalysator zur Verfügung zu stellen, welcher auch bei Anwesenheit von Katalysatorgiften aktiv genug ist, Stickoxide in Gegenwart von Ammoniak zu reduzieren. Dabei sollte die Umsetzung vorzugsweise In einem Temperaturbereich von unterhalb 180 °C, insbesondere in einem Bereich von 90 bis 160 °C, erfolgen.

Erfindungsgemäß wird diese Aufgabe durch einen Aktivkohle-Katalysator gelöst, welcher einen spezifischen Stickstoffgehalt in Kombination mit spezifischen Porenvolumina für Mikroporen < 1nm und Makroporen > 1 nm aufweist.

Der erfindungsgemäße Aktivkohle-Katalysator, der erhältlich ist aus dem kohlenstoffhaltigen Material Steinkohle und der stickstoffhaltigen Verbindung Harnstoff, ist dadurch gekennzeichnet, dass er ein Stickstoffgehalt des Kohlenstoffgerüstes zwischen 0,8 und 1,5 Gew.-%, ein Porenvolumen der Mikroporen < 1 nm zwischen 0,2 und 0,4 cm³/g und ein Porenvolumen der Makroporen > 1 nm zwischen 0,4 und 0,6 cm³/g aufweist, worin Aktivkohle-Katalysatoren mit einem Stickstoffgehalt des Kohlenstoffgerüstes von 1,0 Gew.-%, 1,26 Gew.-%, 1,41 Gew.-% und 1,5 Gew.-% ausgenommen sind.

Erfindungsgemäß wurde festgestellt, dass ein Aktivkohle-Katalysator, welcher die vorstehenden Bedingungen erfüllt, geeignet Ist, auch bei Anwesenheit von Katalysatorgiften Stickoxide in Gegenwart von Ammoniak oder Ammoniak abspaltenden Verbindungen, wie Hexamethylentetramin, Harnstoff oder Ammoniumformiat, In einem Temperaturbereich von vorzugsweise unterhalb 160 °C, insbesondere in einem Temperaturbereich von 90 bis 160 °C, zu Stickstoff und Wasser umzusetzen. Wenn Ammoniak verwendet wird, kann dieses in Form von gasförmigem Ammoniak oder in Form von Ammoniakwasser mit unterschiedlichen Konzentrationen an Ammoniak verwendet werden.

In den Beispielen wird gezeigt, dass durch den gezielten Einbau von Stickstoffatomen in das Gittergerüst des erfindungsgemäßen Aktivhohle-Katalysators gezielt die katalytische Wirksamkeit bezüglich der NOₓ-Reduktion In Gegenwart von Ammoniak oder Ammoniak abspaltenden Verbindungen erhöht wird. Es wird ferner gezeigt, dass nicht nur der Stickstoffgehalt, sondern auch das Porenvolumen (gemessen durch Benzoladsorption und Quecksilberporosimetrie) die katalytische Leistung des erfindungsgemäßen Aktivkohle-Katalysators beeinfiusst.

Durch gezielte Variation dieser beiden Parameter gelingt es, erfindungsgemäße Aktivkohle-Katalysatoren mit unterschiedlich hohen, dem Jeweiligen Anwendungsfall angepassten katalytischen Aktivitäten und Produktionskosten herzustellen.

Weitere Beispiele belegen, dass auch in Gegenwart von Schwermetallen, wie Arsen und Bor, die katalytische Leistung bezüglich der NOₓ-Reduktion weitgehend erhalten bleibt, Erst sehr hohe Beladungen des erfindungsgemäßen Aktivkohle-Katalysators führen zu einer langsamen Deaktivierung. Das bedeutet für den Einsatz des erfindungsgemäßen Aktivkohle-Katalysators zur Reinigung von Gasen, die Stickoxide (NOₓ) und Schwermetalle enthalten, dass sowohl die Stickoxide als auch die giftigen Schwermetalle aus dem Rohgas entfernt werden.

Der erfindungsgemäße Aktivkohle-Katalysator kann dabei sowohl als Vollkatalysator, aber auch als Beschichtungskatalysator ausgeführt werden. Wenn der erfindungsgemäße Katalysator als Beschichtungskatalysator ausgebildet ist, kann dieses durch Mahlen des erfindungsgemäßen Katalysators und Aufbringen auf einem beliebigen Träger erreicht werden.

Weiterer Gegenstand der vorliegenden Erfindung Ist die Herstellung der erfindungsgemäßen Aktivkohle-Katalysatoren.

Die Herstellung des erfindungsgemäßen Aktivkohle-Katalysators erfolgt dabei im Allgemeinen in der Weise, dass Steinkohle als kohlenstoffhaltiges Material in einem Wirbelschlchtreaktor, Schachtofen, Drehrohrofen oder Mehretagenofen bei Temperaturen oberhalb von 750 °C mit einem Gemisch aus Wasserdampf, Stickstoff und Kohlendioxid teilvergast wird und gleichzeitig Harnstoff als stickstoffhaltige Verbindung mit in den Reaktor eingebracht wird, wobei eine Verfahrensdauer bis zum Erhalt der anspruchsgemäßen Porenvolumina angewendet wird.

Als kohlenstoffhaltiges Material wird Steinkohle verwendet.

Als stickstoffhaltige Verbindung wird Harnstoff verwendet.

Die Herstellung des erfindungsgemäßen Katalysators erfolgt vorzugsweise unter Verwendung eines mehrstufigen Wirbelschichtbetts.

In einer bevorzugten Ausführungsform wird als Stickstoff enthaltende Verbindung eine wässrige Harnstofflösung in die mehrstufige Wirbelschicht dosiert. Die Konzentration der Harnstofflösung beträgt 45 %. Sie wird in einer Menge von 2 bis 10 kg Harnstoff pro 100 kg kohlenstoffhaltigen Materials eingesetzt. Als optimal hat sich eine Harnstoffmenge von 5 bis 6 kg pro 100 kg kohlenstoffhaltiges Material erwiesen.

Vorteilhaft und kostengünstig ist es, wenn das kohlenstoffhaltige Material In einem Wirbelschichtrecktor, Schachtofen, Drehrohrofen oder Mehretagenofen bei Temperaturen oberhalb von 750 °C, vorzugsweise zwischen 800 bis 900 °C, mit einem Gemisch aus Wasserdampf, Stickstoff und Kohlendioxid teilvergast wird und gleichzeitig die stickstoffhaltige Substanz mit in den Reaktor eingebracht wird. Das Vergasungsgas aus Wasserdampf, Stickstoff und Kohlendioxid kann durch Verbrennen von Erdgas, Öl oder anderen kohlenwasserstoffhaltigen Brennstoffen erhalten werden. Durch diese Tellvergasung wird sowohl Stickstoff In das Kohlenstoffgerüst eingebaut als auch das gewünschte Mikro- und Makroporensystem geschaffen. Das Mlkro- und Makroporenvolumen steigt mit zunehmender Tellvergasung des Kohlenstoffgerüstes an, so dass durch Variation der Dauer der Teilvergasung die erfindungsgemäßen Katalysatoren erhalten werden. Mit zunehmender Tellvergasung nehmen sowohl die Mikro- und Makroporen zu, allerdings erhöhen sich auch die Herstellungskosten.

Welterer Gegenstand der vorliegenden Erfindung ist die Verwendung mindestens eines erfindungsgemäßen Aktivkohle-Katalysators zur Reduktion von Stickoxiden.

Die Umsetzung der Stickoxide erfolgt dabei vorzugsweise In Gegenwart von Ammoniak (in gasförmiger Form oder in Form von wässrigen Lösungen mit beliebigen Ammoniak-Konzentrationen) oder Ammoniak freisetzenden Verbindungen, wie beispielsweise Harnstoff oder Ammoniumformiat, in einem Temperaturbereich von vorzugsweise unterhalb von T80 °C, insbesondere in einem Temperaturbereich von 90 bis 160 °C.

In einer besonderen Ausgestaltung der erfindungsgemäßen Verwendung kann das dabei behandelte Rohgas Katalysatorgifte, wie beispielsweise Arsen und Bor, enthalten.

Der erfindungsgemäße Aktivkohle-Katalysator kann dabei in jeder beliebigen Form verwendet werden. In Frage kommen beispielsweise Pellets, Granulat, Pulver oder Trägerkatalysatoren.

Im Rahmen der vorliegenden Erfindung ist es auch möglich, den erfindungsgemäßen Aktivkohle-Katalysator zusammen In Kombinationen mit einem herkömmlichen SCR-Katalysator, welcher dem erfindungsgemäßen Aktivkohle-Katalysator entweder vor- oder nachgeschaltet wird, zu verwenden. Selbstverständlich besteht auch die Möglichkeit, mehr als zwei erfindungsgemäße Katalysatoren in einer Katalysatoranordnung zusammenzufassen.

Die vorliegende Erfindung wird anhand der nachfolgenden Beispiele näher beschrieben, welche die Erfindung Jedoch nicht beschränken.

### Herstellung des Aktivkohle-Katalysators:

Zur Optimierung des Grundgedankens wurden zunächst Muster mit unterschiedlichem Stickstoffgehalt und unterschiedlichem Mikro- und Makroporenvolumen hergestellt. Dazu wurden In einen achtstufigen Wirbeischichtreaktor 600 kg/h an kohlenstoffhaltigen 4 mm-Formlingen aus dem Rohstoff Steinkohle eindosiert. Die Feuerraumtemperatur betrug ca. 900 °C und das Wirbeigas wird durch Verbrennung von Erdgas erzeugt. Zur Teilvergasung des 4 mm-Formlings wurden noch 300 kg/h Dampf dosiert. Das Muster Nr. 1 + 2 (Vergleichsbeispiel) wurde ohne Zusatz einer stickstoffhaltigen Verbindung hergestellt. Die weiteren Muster der Aktivkohle-Katalysatoren wurde durch Zugabe der stickstoffhaltigen Verbindung Harnstoff (in Form einer wässrigen 45 %igen Lösung) produziert, wobei die Lösung in den Wirbeischichtreaktor eindosiert wurde.

Zur Anlagerung von Stickstoff in das Kohlenstoffgerüst auf einen Gehalt von ca. 0,4 Gew.-% waren 2 kg Harnstoff/100 kg, für 0,8 Gew.-% Stickstoff 3,8 kg Harnstoff/100 kg und für 1,5 Gew.-% Stickstoff 6 kg Harnstoff/100 kg Aktivkohle-Katalysator erforderlich. Mit zunehmendem Porenvolumen der Muster wurden längere Verweilzeiten im Wirbeischichtreaktor erforderilch.

### Bestimmung des NO-Umsatzes:

Zur Bewertung des Vergleichsmusters und der hergestellten Katalysatoren wurde der NO-Umsatz mit einer Testapparatur gemessen. Der NO-Umsatz wird bei einer Temperatur von 120 °C mit einem Modellrauchgas (400 ppm NO. 400 ppm NH₃, 22 Vol-% O₂ und 17 Vol-% H₂O, Rest: N₂) bestimmt.

In einem beheizten Reaktor werden 1,06 I der getrockneten Aktivkohle eingefüllt und mit dem Modellrauchgas bei einer Reaktionstemperatur von 120 °C durchströmt. Die Kontaktzelt beträgt 10 sec. Es wird die NO-Durchbruchskonzentration während der Messung registriert und aus der NO-Konzentration im Reingas nach 20 h der NO-Umsatz (bezogen auf die NO-Elngangskonzentration) berechnet.

### Beispiel 1 (Vergleichsbeispiel):

Die Muster Nr. 1 und Nr. 2 wurden ohne Zugabe der stickstoffhaltigen Substanz Harnstoff hergestellt. Der NO-Umsatz lag mit 42 % (Muster 1) bzw. 44 % (Muster 2) sehr niedrig. Obwohl das Mikro- und Makroporenvolumen von Muster 2 deutlich höher als Muster 1 war, wurde nur eine geringfügige innerhalb der Messgenaulgkelt liegende Erhöhung des NO-Umsatzes gemessen.

### Beispiel 2:

Die Muster Nr. 1-0,4 % Stickstoff und 1-0,8% Stickstoff wurden durch Zusatz von Harnstofflösung in den Wirbeischichtreaktor erhalten. Bei einem Stickstoffgehalt von 0,4 Gew.-% wurde ein NO-Umsatz von 65 und bei einem Stickstoffgehalt von 0,8 Gew.-% von 71 % gemessen.

### Beispiel 3:

Durch Dosierung unterschiedlicher Mengen an Harnstoff wurd in dem Wirbeischichtreaktor der Stickstoffgehalt der Proben 2-0,4 % N, 2-0,8% N und 2-1,5 % N auf 0,4, 0,8 und 1,5 Gew.-% erhöht. Dieser erhöhte Stickstoffgehalt Im Kohlenstoffgerüst verbessert den NO-Umsatz auf 67 %, 80 % und 91% (1,5 Gew.-% N).

### Beispiel 4:

Beispiel 4 soll verdeutlichen, dass eine weitere Erhöhung des Mikro- und Makroporenvolumens bei identischen Stickstoffgehalten nicht zu einer Verbesserung des NO-Umsatzes führt. Im Gegenteil, wie die Muster 4-0,4 % N, 4-0,8 % N, 5-0,4 % N und 5-0,8 % N belegen, verringert sich der NO-Umsatz ab einem Mikroporenvolumen < 1 nm von 0,34 cm³/g und einem Makroporenvolumen > 1 nm von 0,45 cm³/g.

Die Beispiele 1 bis 4 verdeutilchen, dass nicht nur der Stickstoffgehalt des Aktivkohle-Katalysators, sondern auch das Porenvolumen Einfluss auf den NO-Umsatz nehmen. Da sich die Herstellüngskosten des Aktivkohle-Katalysators mit zunehmendem Stickstoffgehalt aber vor allem mit zunehmenden Mlkro- und Makroporenvolumen erhöhen, wird aus wirtschaftlichen Gründen folgende Optimierung durchgeführt.

Für unproblematische Gasreinigungsprobleme mit niedrigem NO-Gehalt sind Aktivkohle-Katalysatoren vom Typ 1-0,4 % N und 1-0,8 % N geeignet. Als aus wirtschaftlicher und technischer Sicht optimierte Produkte für höhere NO-Gehalte (> 300 ppm) im Rohgas sind die Katalysatoren 2-0,4 % N, 2-0,8 % N und 2-1,5 % N sowie die Typen 3-0,4 % N, 2-0,8 % N zu bezeichnen.

### Einfluss von Schwermetallen auf die katalytische Aktivität

Da es schwierig ist, im Labor ein NO- und schwermetallhaltiges Modellgas herzustellen, wurde folgender Weg gewählt: Das Katalysatormuster 2-0,8 % N wurde in einer Pilotanlage zur NO-Entfernung aus einem realen Abgas eingesetzt, das zusätzlich zum NOₓ noch die Schwermetalle Arsen und Bor enthielt. Bei einer Verwellzeit von 12 sec konnte der NO-Gehalt von 360 ppm auf 50 ppm reduziert werden, Um für Aktivltätsuntersuchungen in der NO-Testapparatur unterschiedlich hoch mit Arsen und Bor belastete Muster zu erhalten, wurden aus der Gaseingangsschicht des Reaktors nach 3 Tagen Muster 6.1.2 (0,8 % N) und nach 9 Tagen Muster 6.2.2 (0,8 % N) gezogen. Obwohl beide Muster erhebliche Mengen an Arsen und Bor aufgenommen hatten, war die katalytische Aktivität nur geringfügig von ca. 80 % (Ausgangsmaterial) auf 73 % bzw. 71 % reduziert worden. Erst bei extrem hohen Schwermetallgehalten (Muster 6.3.2 - 0,8 % N) von 865 mg/kg Arsen und 7185 mg/kg Bor sank die katalytische Leistung auf 15 %. Da die

Schwermetalle in der Gaseingangsschicht der Pilotanlage abgeschieden werden, waren Im Reingas nach 45 Tagen nur 50 ppm NO enthalten.

| **Tabelle 1: Untersuchungen an dem beanspruchten Katalysator** | | | | | | |
|---|---|---|---|---|---|---|
| Muster-Nr. | Porenvolumen (cm³/g) | | Stickstoffgehalt (% N) | Schwermetalle auf dem Katalysator | | NO-Umsatz (%) |
| | Mikroporen < 1 nm | Makroporen > 1 nm | | Arsen m/kg | Bor mg/kg | |
| 1 | 0,15 | 0,36 | 0,3 | - | - | 42 |
| 1-0,4 % N | - | - | 0,4 | - | - | 65 |
| 1-0,8 % N | - | - | 0,8 | - | - | 71 |
| 2-0,4 % N | 0,26 | 0.41 | 0,4 | - | - | 67 |
| 2-0,8 % N | - | - | 0,8 | - | - | 80 |
| 2-1,b % N | - | - | 1,5 | - | - | 91 |
| 3-0,4 % N | 0.34 | 0,45 | 0.4 | - | - | 63 |
| 3-0,8 % N | - | - | 0.8 | - | - | 78 |
| 4-0,4 % N | 0,4 | 0,60 | 0.4 | - | - | 59 |
| 4-0,8 % N | - | - | 0,8 | - | - | 71 |
| 5-0,4 % N | 0,47 | 0,72 | 0,4 | - | - | 49 |
| 5-0.8 % N | - | - | 0,8 | - | - | 64 |
| 6.1.2-0,8 % N* | 0,2 | 0,41 | 0,8 | 31 | 2560 | 72 |
| 6.2.2-0,8 % N* | | | | 115 | 1340 | 71 |
| 6.3.2-0.8 % N* | | | | 865 | 7185 | 15 |

| | | | | | | |
|---|---|---|---|---|---|---|
| * Der Katalysator 2-0,8 % N wurde mit realem Abgas (mit NOₓ, Arsen und Bor verunreinigt), In einer Pilotanlage beaufschlagt und nach unterschiedlichen Katalysator-Laufzeiten an der Gaseintrittsseite entnommen und zur Bewertung des NOₓ-Umsatzes In der NO-Testanlage untersucht | | | | | | |

## Patentansprüche

1. Aktivkohle-Katalysator, erhältlich aus dem kohlenstoffhaltigen Material Steinkohle und der stickstoffhaltigen Verbindung Harnstoff, **dadurch gekennzeichnet, dass** der Aktivkohle-Katalysator ein Stickstoffgehalt des Kohlenstoffgerüstes zwischen 0,8 und 1,5 Gew.-%, ein Porenvolumen der Mikroporen < 1 nm zwischen 0,2 und 0,4 cm³/g und ein Porenvolumen der Makroporen > 1 nm zwischen 0,4 und 0,6 cm³/g aufweist, worin Aktivkohle-Katalysatoren mit einem Stickstoffgehalt des Kohlenstoffgerüstes von 1,0 Gew.-%, 1,26 Gew.-%, 1,41 Gew.-% und 1,5 Gew.-% ausgenommen sind.

2. Verfahren zur Herstellung eines Aktivkohle-Katalysators gemäß Anspruch 1, **dadurch gekennzeichnet, dass** Steinkohle als kohlenstoffhaltiges Material in einem Wirbelschichtreaktor, Schachtofen, Drehrohrofen oder Mehretagenofen bei Temperaturen oberhalb von 750 °C mit einem Gemisch aus Wasserdampf, Stickstoff und Kohlendioxid tellvergast wird und gleichzeitig Harnstoff als stickstoffhaltige Verbindung mit in den Reaktor eingebracht wird, wobei eine Verfahrensdauer bis zum Erhalt der anspruchsgemäßen Porenvolumina angewendet wird.

3. Verwendung des Aktivkohle-Katalysators gemäß Anspruch 1 zur NOₓ-Entfernung.

4. Verwendung nach Anspruch 3, **dadurch gekennzeichnet, dass** die Entfernungen von NOₓ in Gegenwart von Katalysatorgiften erfolgt.

5. Verwendung nach Anspruch 3 oder 4, **dadurch gekennzeichnet, dass** die NOₓ-Entfernung bei einer NOₓ-Konzentration von weniger als 300 ppm erfolgt.

6. Verwendung nach Anspruch 3 oder 4, **dadurch gekennzeichnet, dass** die NOₓ Entfernung bei einer NOₓ-Konzentration von mehr als 300 ppm erfolgt.

## Claims

1. An activated carbon catalyst, obtainable from the carbonaceous material black coal and the nitrogenous compound urea, **characterized in that** the activated carbon catalyst has a nitrogen content in the carbon framework between 0,8 to 1,5 % by weight, a pore volume of the micropores < 1 nm between 0.2 to 0,4 cm³/g and a pore volume of the macropores > 1 nm between 0,4 to 0,6 cm³/g, wherein the activated carbon catalysts having a nitrogen content of the carbon framework of 1,0 % by weight, 1,26 % by weight, 1,41 % by weight and 1,5 % by weight are excluded.

2. A process for the production of an activated carbon catalyst according to claim 1, **characterized in that** the black coal as carbonaceous material is partially gasified with a mixture of steam, nitrogen and carbon dioxide in a fluidised bed reactor, pit furnace, rotary furnace or multilevel furnace at temperatures of more than 750 °C and urea as the nitrogenous compound Is simultaneously fed into the reactor, wherein a duration of the process is applied until the claimed pore volumes are obtained.

3. A use of the activated carbon catalyst according to claim 1 for the removal of NOₓ.

4. The use according to claim 3, **characterized in that** the removal of NO, Is carried out in the presence of catalytic poisons.

5. The use according to claim 3 or 4, **characterized in that** the removal of NOₓ Is carried out at a concentration of NO, of less than 300 ppm.

6. The use according to claim 3 or 4, **characterized In that** the removal of NO, Is carried out at a concentration of NOₓ of more than 300 ppm.

## Revendications

1. Catalyseur au charbon actif, accessible du matériau carboné de charbon et le composé azoté d'urée, **caractérisé en ce que** le catalyseur au charbon actif présente une teneur en azote du squelette carboné entre 0,8 et 1,5 % en poids, un volume des pores des micropores < 1 nm entre 0,2 à 0,4 cm³/g et un volume des pores des macropores > 1 nm entre 0,4 et 0,6 cm'/g, dans lequel les catalyseurs au charbon actif présentant une teneur en azote du squelette carboné de 1,0 % en poids, de 1,26 % en poids, de 1,41 % en poids et de 1,5 % en poids sont exclues.

2. Procédé de production d'un catalyseur au charbon actif selon la revendication 1, dans lequel le charbon en tant que matériau carboné est gazéifié partiellement avec un mélange de vapeur d'eau, de l'azote et de dioxyde de carbone dans un réacteur à lit fluidisé, un fourneau à cuve, un four tubulaire rotatif et un four à plusieurs niveaux aux températures supérieures à 750 °C et en même temps de l'urée en tant que composé azoté est introduite dans le réacteur, dans lequel une durée du procédé est employée jusqu'à les volumes des pores revendiqués sont obtenus.

3. Utilisation du catalyseur au charbon actif selon la revendication 1 pour l'élimination de NOₓ.

4. Utilisation selon la revendication 3, **caractérisée en ce que** l'élimination de NOₓ est effectuée en présence des poisons de catalyseur.

5. Utilisation selon l'une des revendications 3 ou 4, **caractérisée en ce que** l'élimination de NOₓ est effectuée à une concentration de NOₓ qui est inférieure à 300 ppm.

6. Utilisation selon l'une des revendications 3 ou 4, **caractérisée en ce que** l'élimination de NOₓ est effectuée à une concentration de NOₓ qui est supérieure à 300 ppm,
